# EUROPEAN PATENT APPLICATION

(11) **EP 4 807 546 A1**
(43) Date of publication of application: **16.09.2026**
(21) Application number: 25162682.6
(22) Date of filing: 10.03.2025
(51) Int. Cl.: G06F 9/455, G06F 12/14

(54) **CONCEPT FOR EXECUTING A SAFETY-CRITICAL APPLICATION**

(71) Applicant: Elektrobit Automotive GmbH, 91058 Erlangen (DE)
(72) Inventor: Kirchmaier, Ulrich, 91058 Erlangen (DE); Armbruster, Michael c/o emlix GmbH, 37073 Göttingen (DE); von Czettritz und Neuhaus, Michel c/o emlix GmbH, 37073 Göttingen (DE); Petersohn, Jens, 91058 Erlangen (DE)
(74) Representative: Aumovio Corporation

(57) **Abstract**

Embodiments of the present disclosure relate to an apparatus, a vehicle, a data carrier, a computer program, and a method for executing a safety-critical application. The method comprises executing, in one or more first execution environments on the hardware platform, the safety-critical application. Further, the method comprises executing, in a second execution environment on the hardware platform, a supervisor component for the safety-critical application. Also, the method comprises providing a first memory-mapped interface used by the safety-critical application and providing a second memory-mapped interface used by a non-safety-critical application running in one of the first execution environments. As well, the method comprises detecting, by the supervisor component, a transition of a control flow between the safety-critical application and the non-safety-critical application running in the first execution environment and, in response to detecting that the control flow is transitioning from the safety-critical application to the non-safety-critical application, restricting, by the supervisor component, access to the first memory-mapped interface.

## Description

Embodiments of the present disclosure relate to an apparatus, a vehicle, a data carrier, a computer program, and a method for executing a safety-critical application. In particular, the concept proposed herein relates to an approach for executing a safety-critical application and a mixed-criticality environment.

Mixed-criticality environments may be applied in various technical applications. A typical example is a display control unit (DCU) including software (SW)-based blending of multiple frame buffer layers, some of which are safety related and others are not. In other implementations, other types of data may be processed, wherein one portion of the data may be safety-related (also referred to herein as "safety-critical") while another portion is not.

It is assumed, that a device ensures data-integrity for at least one channel that can be fed by high-integrity applications. It is further assumed, that once the data of that channel is processed within the device, that data integrity for these process steps hold a claim on data-integrity up to a certain safety integrity level. This could be SIL (safety integrity level) 2/ ASIL-B (automotive safety integrity level). In other implementations, other safety integrity levels may apply. Typically, a memory-mapped (IO) device, like a DCU, provides a memory-interface to its functionality. Features implemented within the HW-device may be specific to a vendor. The same holds true for the claims on data integrity, that are ensured by the device or not.

In some approaches, data integrity is ensured via checksums. Those are calculated with the help of the hardware (HW). First, a safety-related application calculates appropriate checksums. Then, the hardware does the same at "the latest point in time". This is within the display control unit (DCU). The checksums of the application and the HW are compared within the high integrity application/safety-related application. In this way, faults and modifications can be detected.

Typically, "VirtIO"is required to grant shared access to memory-mapped IO devices from within multiple virtual machines. For example, in a DCU scenario, at least one of those virtual machines can be considered safety-related and creates "telltale"-images or sub-images which are then overlayed/composited with other non safety-related images.

In existing approaches, Cyclic Redundancy Checks (CRCs) need to be calculated in HW (and within the DCU) and the corresponding safety-related application, which is a complex task.

Also, all the functionalities, e.g., for blending needs to be implemented within the HW - as safety-related functionality and with very little possibilities to adapt and extend that functionality. As a design alternative, e.g. blending could be implemented in SW which is complex likewise and would require this SW to be safety-related as well.

Another drawback of existing approaches face that the HW does not ensure a mixed-criticality interface to applications that comes with separation of memory regions for frame buffers and config/configuration registers.

The subject-matter of the appended independent claims provide an improved concept for executing a safety-critical application in a mixed-criticality environment.

In particular, embodiments of the proposed approach may make VirtIO obsolete, which reduces a computational effort and improves performance. Also, signature calculations may not be required anymore within HI-applications and within safety qualified HW.

Also, data/ frame pre-processing before feeding a hardware-processing pipeline can be done based on SW and as such flexible and adaptable and can have its own life-cycle fully independent from the one for HW, HV or HI-applications.

Embodiments of the present disclosure provide a method for executing a safety-critical application on a hardware platform. The method comprises executing, in one or more first execution environments on the hardware platform, the safety-critical application. Further, the method comprises executing, in a second execution environment on the hardware platform, a supervisor component for the safety-critical application. Also, the method comprises providing a first memory-mapped interface used by the safety-critical application and providing a second memory-mapped interface used by a non-safety-critical application running in one of the first execution environments. As well, the method comprises detecting, by the supervisor component, a transition of a control flow between the safety-critical application and the non-safety-critical application running in the first execution environment and, in response to detecting that the control flow is transitioning from the safety-critical application to the non-safety-critical application, restricting, by the supervisor component, access to the first memory-mapped interface.

In other words, an additional mixed criticality interface is implemented. In this way, spatial Freedom from interference (sFFI) may be provided even if a non- or low-integrity (LI) application ("non-safety-related/critical application) and a high-integrity (HI) application ("safety-related/critical application"). So, the proposed approach provides safety integrity even in a mixed-criticality environment. At the same time, the proposed approach does not rely on VirtIO and, therefore, saves computing resources.

In some embodiments, the method further comprises providing one or more processing functionalities and instantiating by a hypervisor a third memory-mapped interface for accessing, by the one or more processing functionalities, the first memory-mapped interface via the third memory-mapped interface. For this, the third memory-mapped interface, e.g., virtualizes the first memory-mapped interface.

An underlying idea of the use of the third memory-mapped interface is that normally, the hardware (HW) accesses the "first memory-mapped interface" and processes the data stored there. It is proposed that the safety-critical application writes data to the first memory-mapped interface. Instead of the HW accessing this data directly, another safety-critical application (further processing functionality) processes this data and writes it to the third memory-mapped interface. The HW then accesses the data in the third memory-mapped interface without being aware of the intermediary processing. This intermediary processing functionality may run in a different virtual machine (different from the first mentioned safety-critical application) and, in some embodiments, is implemented "close" to the HW in a hypervisor-near virtualization environment, such as an L4 runtime environment. This setup allows for HW-near implementation and execution. Theoretically, this functionality could also be executed directly within the safety-critical application of the first execution environment, eliminating the need for the additional memory-mapped interface.

In practice, the first memory-mapped interface may store first data in one or more first layers, and the second memory-mapped interface may store second data in one or more second layers. In the present disclosure, the layers can be understood as memory regions.

The first and second data, e.g., include frame data. The frame data, e.g., includes image and/or video frames. The same may apply to data stored in the third memory-mapped interface.

In some embodiments, the method is executed for operating a vehicle. In examples, the proposed method may be applied for operating a human-machine interface of a vehicle or for controlling/maneuvering the vehicle, e.g., in connection with a driver assistance or autonomous driving system.

In some embodiments, detecting, by the supervisor component, a transition of a control flow comprises the non-safety-critical application indicating via synchronous or asynchronous communication with the safety-critical application or via a control register provided by the hardware platform completion of a data transfer or the safety-critical application indicating via the control register completion of a data transfer.

Additionally or alternatively, detecting, by the supervisor component, a transition of a control flow comprises detecting an exception in response to diverting a process flow to an application running in one of the first execution environments for processing data stored in the first memory-mapped interface.

In some embodiments, the method further comprises further diverting the control-flow to a functionality for pre-processing data stored in the first and/or second memory-mapped interface before providing the processed data to a processing pipeline provided by the hardware platform and/or further diverting the control flow for processing the data by the processing pipeline.

In some embodiments, virtualization of and/or access to the first memory-mapped interface is controlled by a hypervisor including the supervisor component.

Further embodiments provide a computer program comprising instructions which, when the computer program is executed by a computer, cause the computer to carry out an embodiment of the proposed method.

Further embodiments provide computer-readable data carrier having stored thereon such computer program.

Further embodiments provide an apparatus comprising one or more interfaces for communication and a data processing circuit configured to execute an embodiment of the proposed method.

Further embodiments provide a vehicle comprising an embodiment of the proposed apparatus.

Further, embodiments are now described with reference to the attached drawings. It should be noted that the embodiments illustrated by the referenced drawings show merely optional embodiments as an example and that the scope of the present disclosure is by no means limited to the embodiments presented:

### Brief description of the drawings

Fig. 1 shows a block diagram schematically illustrating a frame processing application;
Fig. 2 shows a flow chart schematically illustrating an embodiment of a method for executing a safety-critical application;
Fig. 3 shows a block diagram schematically illustrating an embodiment of the proposed approach;
Fig. 4 shows a flow diagram schematically illustrating a control flow sequence;
Fig. 5 shows a block diagram schematically illustrating another embodiment of the proposed approach; and
Fig. 6 shows a block diagram schematically illustrating an embodiment of an apparatus according to the proposed approach.

As mentioned above, coexistence of safety-critical and non-safety-critical applications in unqualified environments (e.g., userland) may require VirtIO to meet safety/integrity requirements. However, this may require additional computing resources.

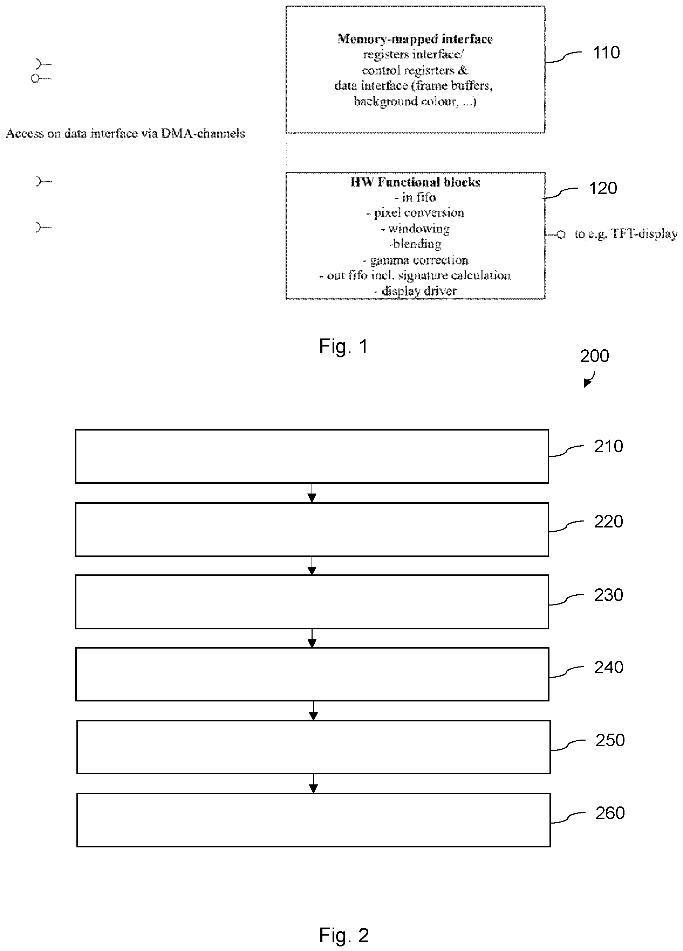

The same applies to implementations as shown in Fig. 1.

Fig. 1 refers to an implementation including a memory-mapped interface 110 and hardware (HW) functional blocks 120. In the context of the present disclosure, "hardware functional blocks" may refer to distinct, modular sections within a hardware system, each designed to perform a specific function (e.g., pixel conversion). These blocks may be integral components that may have independent functions and/or collectively contribute to the overall functionality. Examples of hardware functional blocks include processors, which handle computations and control; memory units which store data and instructions; input/output interfaces that manage communication with external devices; power management units that regulate and distribute power; communication modules that facilitate data transmission within the system or with external systems; and/or analog and digital converters that enable the processing of real-world signals. Each hardware functional block may operate independently yet in coordination with other blocks to ensure the efficient and reliable performance of the hardware platform.

The memory-mapped interface 110 may include a data interface. The data interface serves for storing application-specific data. For frame or image processing applications, they may include frame buffers, information on background color, and/or other image information.

The HW functional blocks, e.g., include an in-FIFO for buffering the retrieved data. In other embodiments, alternatives or equivalents thereof may be used. The functionalities may include any kind of functionalities processing the data. In examples including frame or image processing, the functionalities may include one or more image/frame processing functionalities. Such functionalities, e.g., include pixel conversion, windowing, blending, and/or gamma correction.

Further, the HW functional blocks 120 include an output, here, e.g., an out-FIFO. Alternatively, equivalents or alternatives thereof may be applied.

For verification of the data, also an appropriate fault-detection/ integrity verification mechanism may be implemented. In the present example, the HW functional blocks 120 is configured for signature calculation. Alternatively or additionally, other fault detection/ integrity verification mechanisms may be applied, such as checksum verification, data replication, hash functions, error-correcting codes (ECC), and/or data validation may be applied.

Further, the HW functional blocks 120 may include application-specific functionalities. Here, e.g., they include a display driver for interaction with a display (e.g., TFT or any other kind of display). In this way, processed frame or image data can be presented by the display.

As a skilled person will understand, the above fault-detection/ integrity verification mechanism leads to a computational overhead requiring additional resources. And each mechanism has its counterpart to be implemented within the safety-related application. In practice, this may cause higher latencies and may consume higher computing capacities.

The present disclosure provides a solution addressing such drawbacks, as outlined in more detail below with reference to embodiments addressed in further drawings.

Fig. 2 shows a flow chart schematically illustrating an embodiment of a method 200 for executing a safety-critical application on a hardware platform.

The hardware platform, as used herein, can refer to or include a data processing platform or processing circuitry, which may include or refer to e.g., a CPU with one or more processor cores for data processing, or which may refer to a multi-processor architecture. Any reference to a single processor or processor core can include reference to multiple processors or processor cores. Also, the present disclosure is not limited to a particular processor architecture, but rather can be applied to any type or architecture of processors, such as ARM, x86, RISC and others, including multi-processor architectures that share memory.

The hardware platform can include optional components and/or provide optional hardware resources for data processing, such as a physical memory, e.g., Random Access Memory, cache memory, and/or other components. The hardware platform may be implemented in, and/or may be part of the computing system described herein. Hence, the terms hardware platform and computing system may be interchangeably or synonymously used herein.

As the skilled person will appreciate, the proposed method may be applied in various fields of technology and various cyber-physical systems. Exemplary safety-critical applications in cyber-physical systems (CPS) span various domains, including transportation, healthcare, and industrial automation. In transportation, examples include autonomous vehicle control systems, infotainment systems, and/or assisted driving systems.

In the automotive sector, safety-critical applications may be essential for ensuring the safe operation of vehicles. These include electronic stability control (ESC), anti-lock braking systems (ABS), adaptive cruise control (ACC), and advanced driver-assistance systems (ADAS) such as lane-keeping assistance and collision avoidance systems. These systems must adhere to stringent safety standards like ISO 26262 to ensure they function correctly under all relevant conditions.

Safety-critical image/frame processing applications are crucial in automotive and other domains. In automotive, these include systems/applications for processing telltales (telltale images), gear selection ("drive" or "reverse"). In further embodiments, safety-critical applications may also include lane departure warning, traffic sign recognition, pedestrian detection, collision avoidance, and/or the like. These applications rely on real-time image processing to interpret visual data from cameras and sensors, making split-second decisions to enhance vehicle safety.

For safe operations, safety-critical applications may require ensuring the integrity of data processed. In practice, e.g., it may need to be ensured that frames or images of image/frame processing functionalities are not manipulated or modified to guarantee valid results.

The term "safety-critical application" is typically understood as software(-based) application or program whose failure or malfunction can at least in principle result in damage or harm, to one or more of machinery, equipment, human health, and environmental health. As the present disclosure focuses on aspects related to the software-based safety-critical application and/or the corresponding computing system, the terms safety-critical and safety-related application or system can be interchangeably or synonymously used herein. In other words, in the context of the present disclosure, the term safety-critical can include or refer to safety-related, and vice versa.

In contrast, non-safety-critical applications, e.g., focus on enhancing user experience and convenience rather than ensuring (functional) safety. Examples include infotainment systems, navigation systems, climate control, and in-vehicle's entertainment. While these applications improve comfort and convenience, their failure does not pose a direct threat to the safety of the vehicle or its occupants.

The term "application" as used herein can refer to or include a software application or program. The term "application" as used herein is not necessarily limited to pure software applications, but can include software-based applications, which may optionally include one or more interfaces for receiving sensor signals from one or more sensors and/or for transmitting one or more control signals, interchangeably used herein with actuation signal, to one or more actuators, and/or other hardware components.

Method 200 comprises executing 210, in one or more first execution environments on the hardware platform, the safety-critical application.

In this context, an (execution) environment may be understood as a software layer that provides services and resources for a program to execute. It includes the infrastructure needed to run applications, such as memory management, input/output operations, and system calls. This environment ensures that the program can interact with the hardware.

In practice, the one or more first execution environments may comprise a mixed-criticality environment where not only the safety-critical application but also one or more non-safety-critical applications are running/executed. The one or more first environments, e.g., include a so-called "userland".

Further, method 200 comprises executing 220, in a second execution environment on the hardware platform, a supervisor component for the safety-critical application. The second execution environment may be a safety-qualified environment. In practice, the second execution environment, e.g., may be developed under predefined safety requirements For example, the second execution environment meets specific safety/integrity requirements (e.g., it complies with a certain safety integrity level). In embodiments, the second execution environment may comply with a higher safety integrity level than any of the first environments or the first environment where the safety-critical application and/or non-safety-critical application is executed.

According to embodiments of the present disclosure separate memory-mapped interfaces are provided for the safety-critical application and non-safety-critical applications.

Method 200 comprises providing 230 a first memory-mapped interface used by the safety-critical application.

Further, method 200 comprises providing 240 a second memory-mapped interface used by a non-safety-critical application running in one of the first execution environments.

The memory-mapped interfaces allow hardware devices to be controlled and accessed using standard memory read and write operations. In this setup, specific memory addresses are assigned to hardware registers, enabling a central processing unit (CPU) to interact with these devices as if they were part of the system's main memory. This approach simplifies the communication between the CPU and peripherals, as it eliminates the need for special I/O instructions. By mapping device registers into the address space, functionalities can directly read from or write to these addresses to control hardware functions, improving efficiency and performance.

In examples of the present disclosure, e.g., data to be processed by the safety-critical application is stored in the first memory-mapped interface and data to be processed by the non-safety-critical application may be stored in the second memory-mapped interface. In practice, the data may be frame or image data, as laid out later with reference to a specific embodiment.

Further, method 200 comprises a safety mechanism to make sure that data is stored in the first memory-mapped interface cannot be manipulated by unauthorized applications running in any of the first environments, e.g., by any non-safety-critical application.

For this, method 200 further comprises detecting 250, by the supervisor component, a transition of a control flow between the safety-critical application and the non-safety-critical application running or kernel in the first execution environment and, restricting 260 or kernel, by the supervisor component, access to the first memory-mapped interface in response to detecting that the control flow is transitioning from the safety-critical application to the non-safety-critical application or kernel.

In practice, e.g., write access to the first memory-mapped interface may be granted when the control flow switches to the safety-critical application. In this way, the safety-critical application can write data into the first memory-mapped interface.

In contrast, (write and, optionally also read and execute) access may be prohibited when the control flow switches away from the safety-critical application (to the non-safety-critical application or any other software, such as the kernel).

The proposed solution may exhibit one or more of the following advantages:
□ Less performance costs: The separated memory-mapped interfaces in combination with the supervisor component restricting access to the memory-mapped interfaces synergistically render an additional memory virtualization, as in VirtIO, unnecessary while unauthorized modification or manipulation of the data stored may be prevented, thereby ensuring the integrity of the data.
□ As well, less maintenance may be required as no VirtIO is involved.
□ Less dependency on HW features: For example, no cyclic redundancy check (CRC) is required anymore, thereby saving computational resources.
□ Accordingly, the need to implement fault-detection patterns (CRC) on layer of applications is reduced or ideally removed.
□ In image/frame processing applications: Flexibility/ Adaptability of frame-buffer pre-processing (blending ...) while maintaining data-integrity for buffers fed the safety-critical application.
□ The proposed solution serves as mixed-criticality interface to applications running in the same or separate environments, e.g., in the userland.

So, in connection with the separated memory-mapped interfaces, the supervisor component provides comprehensive mitigation means for ensuring freedom from fault-propagation from the kernel towards the first execution environment. In particular, the computer-implemented method and computing system described herein can provide a mitigation measure or means, which can ensure freedom from fault-propagation from any guest operating system (OS), kernel software or part thereof, OS kernel, and/or any other non-safety-qualified process to the safety-critical application. Also, the present method and system can overcome the limitations associated with conventional mitigation measures that are based on redundancy and/or resource-duplication, as mentioned under items (a) and (b) in the background section.

Hence, the method and apparatus described herein can ensure or allow for safe execution of the safety-critical application on the hardware platform, e.g., on top of any guest OS, for example including any guest OS kernel, kernel software or kernel component, and optionally including one or more non-safety-critical applications. In other words, the features and steps of the aforementioned method can synergistically interact to ensure freedom from interference (FFI) to the safety-critical application in terms of one or both space, and/or to reliably detect any interference as described before. In particular, the method of the present disclosure can allow for safe execution of the safety-critical application without necessarily requiring the software components of the guest OS, such as the entire guest OS kernel, to be safety-qualified. In turn, this can allow for safe execution of the safety-critical application on various different hardware platforms, with hardware and software components that may not be safety qualified. It is emphasized that the method and computing system according to the present disclosure can be used to advantage on safety-qualified systems and/or in mixed criticality systems. Hence, the present disclosure is not limited in this respect. Also, the present invention can be used to advantage in conjunction with any kernel, including safety-qualified and non-safety-qualified kernel, such as e.g., a Linux-based kernel.

As used herein, an execution environment may refer to or include a computing environment with an associated configuration and/or specification in terms of hard- and/or software resources, which can be configured for performing one or more computational tasks or functions. Therein, different execution environments can at least in part be isolated or separated from one another in terms of (virtual and/or physical) hardware and their software components. Optionally, different execution environments may be communicatively and/or operatively coupled to one another, and/or to other software components in a computing system, for example based on corresponding interfaces implemented in software and/or hardware. Further optionally, different execution environments can share one or more computing resources, which is also referred to herein as resources and which can include physical and/or virtual hardware resources as well as software resources.

In an exemplary and non-limiting implementation, different execution environments can be realized as virtual computing environments providing one or more virtual machines for the one or more execution environments. Accordingly, different execution environments can be provided in the same virtual machine or in different virtual machines, each providing a particular execution environment. For instance, at least one of or both the first and second execution environments can be executed or provided in at least one virtual machine.

Generally, different execution environments can have the same privilege level or can have different privilege levels with respect to the overall computing system or hardware platform. As commonly understood, different privilege levels may define different sets of permissions or actions allowed to be performed by the respective component, wherein a higher privilege level includes more permissions when compared to a lower privilege level.

In embodiments, the applications, e.g., run on privilege level EL0, the kernel may run on privilege level EL1 and the hypervisor on EL2, wherein EL2 is higher than EL1 which is higher than EL0. Optionally, the supervisor component may run on EL1 or EL2 or EL0.

The first and second execution environments can refer to or denote different execution environments, which may differ in their configuration and/or specification. In particular, the first and second execution environments can denote independent computing environments having at least partly different hard- and/or software resources associated therewith. The first and second execution environments can be at least partly isolated from one another, allowing to independently run or execute one or more software components or programs, such as the safety-critical application in the first execution environment and the supervisor component in the second execution environment. In practice, the supervisor component may be implemented in a hypervisor and may be associated with a virtual machine.

Optionally, at least one of the execution environments can be provided as virtual machine in a virtualization environment of the hardware platform. For example, the first execution environment and/or second execution environment can be provided by a first and/or second virtual machine, in which the safety-critical application, respectively the supervisor component, can be executed. Optionally, one or more further software components may be executed or run in the first and/or second execution environment, for example in user-space, and/or as guest operating system or OS kernel, for example in one or more virtual machines.

In at least one of the first execution environments "other software" is executed or running. As used herein, the other software can refer to or include any software code, program, and/or application being executed in the first execution environment, such as e.g., another process executed in user-space, a guest OS, and/or a guest OS kernel. The "other software" can be safety-qualified or non-safety-qualified. Optionally, also in the second and/or a further execution environment other software may be executed or running.

It should be noted that the present disclosure is not limited to two execution environments, but rather an arbitrary number of execution environments can be utilized. For example, non-safety-qualified and safety-qualified processes or applications may be executed in a plurality of different execution environments, for example to provide safety-qualified and non-safety-qualified execution environments separated from one another. Alternatively, execution environments of mixed criticality can be used, in which safety-qualified and non-safety-qualified software or applications may be executed.

The supervisor component may be implemented and applied as described in the European Patent Application 23205574.9 which is hereby incorporated by reference.

The supervisor component may refer to or denote a supervisory software or monitoring component configured to monitor the first execution environment and/or execution of the safety-critical application in the first execution environments. In other words, the term supervisor component may refer to a software component, which may implement error-detection and/or error-indication. While this definition may correspond to an established understanding in safety engineering, it may deviate from the understanding on the term supervisor software in context of operating systems as a component or program to control or schedule processes and other programs. The supervisor component may be configured to monitor, determine, and/or confirm safe execution of the safety-critical application, for example based on processing information or data related to execution of the safety-critical application in the first execution environment. Such information or data may be retrieved and/or received from the first execution environment. Alternatively, or additionally, such information or data may be provided by a superior or intermediate component of the hardware platform, for example a hypervisor or hypervisor component.

The control flow generally denotes the control flow of the one or more processors and/or processor cores, which may refer to the order in which individual statements, instructions, and function calls of one or more software components or applications are executed, and/or evaluated by the at least one processor, and/or processor core of the hardware platform.

The supervisor component may be configured to detect, based on analyzing the control flow or data associated therewith, that a transition between the safety-critical application and the other software (e.g., non-safety-critical application or context switch into the kernel) is occurring. Such transition is also referred to as context switch or context switching, which refers to the process of storing the state of a process, program, thread, and/or application, so that it can be restored and resume execution at a later point in time. The supervisor component can ensure that the safety-critical application or the first memory-mapped interface cannot get erroneously corrupted, or at least cannot get corrupted without being detected by the supervisor component, The knowledge of a context switch may be used to allow memory access and to switch back and forth between safety- and non-safety-relevant data representations.

As used herein, a context switch between the safety-critical application and the other software, for example a guest OS or program running in user-space, can include a context switch or transition of the control flow from the safety-critical application to the other software, and/or a context switch from the other software to the safety-critical application.

The supervisor component (which may be implemented in the hypervisor) can be configured to detect whether any transition is occurring. Accordingly, the supervisor component can be configured to detect a type or direction of transition of the control flow. Depending on the detected type or direction of the transition of the control flow, the supervisor component may be configured to perform or trigger different tasks.

For instance, in response to detecting that the control flow is transitioning from the safety-critical application to the other software, the supervisor component can be configured to prohibit at least one mode of access to at least one resource used by the safety-critical application. Prohibiting at least one mode of access can include modifying, and/or altering at least one mode of access, and/or access permissions for accessing the at least one resource.

Different modes of access or access permissions can relate to read permission to read from the at least one resource, write permission to write to the at least one resource, and execution permission to execute code in the at least one resource. Therein, the resource may refer to or include hardware-based and/or software-based resources. In particular, the at least one resource can refer to or include physical and/or virtual hardware resources, such as memory, processor register (also referred to as process register), memory register, and/or computing power.

Alternatively, or additionally controlling (e.g., restricting) the access in response to detecting that the control flow is transitioning from the safety-critical application to the other software, the supervisor component may be configured to capture a state of at least one resource used by the safety-critical application. This can include storing a state information of the resource stored, which can be loaded at a later time to resume execution. For instance, one or more of a content, a data content, a status, a processor register, a memory register, and a configuration may be captured.

By the aforementioned measures of the supervisor component during context switching in the first execution environment, it can be ensured that faults within other software, which can be the kernel including its device drivers, that could potentially affect data or execution state/ state of the safety-critical application, can be avoided or at least be detected, for example such that it can be mitigated after an erroneous context switch, which can include e.g., passivation and/or indication of the fault. Hence, safe execution of the safety-critical application can be ensured and an indication is provided, if this is not the case.

According to an embodiment, the memory-mapped interface comprises memory pages or memory layers used by, allocated to, and/or accessed by the safety-critical application. Alternatively, or additionally, restricting access and/or prohibiting at least one mode of access to these memory pages comprises prohibiting writing to these memory pages by other software than the associated safety-critical application. In other words, the memory pages can be marked as and/or set to non-writable. Accordingly, the at least one mode of access prohibited by the supervisor component can relate to write access to memory pages, or in generally memory, used or accessed by the safety-critical application. Accordingly, upon detecting a context switch or transition of the control flow from the safety-critical application to another software, write access of the other software to memory pages used by the safety-critical application can be blocked (which may be a default setting), thereby ensuring that content of the memory pages cannot be altered by the other software during the context switch. Optionally, other modes of access, for example read access to the memory pages and/or execution of code, can be allowed.

According to an embodiment, restricting access to the memory pages used by the safety-critical application comprises prohibiting writing to these memory pages and prohibiting execution of code in these memory pages. In other words, the supervisor component may be configured to prohibit at least two modes of access upon detecting a transition of the control flow from the safety-critical application to the other software, the at least two modes including prohibiting write access and prohibiting execution of code in the memory pages used or accessed by the safety-critical application. Alternatively, or additionally, the memory pages can be marked as, and/or set to non-writable and non-executable. Hence, any alteration or modification of the memory pages, which could affect execution of the safety-critical application and/or data associated with the safety-critical application, can be reliably avoided, or prevented.

According to an embodiment, the restricting of access to memory pages comprises modifying a stage-2 page table tree, stage-2 PTT, maintained for the first execution environments and residing outside this first execution environment. In other words, one or more modes of access may be altered and/or modified in a stage-2 PTT maintained outside the first execution environment, for example hosted by the hypervisor component and maintained by the supervisor component and/or another component, such as e.g., a hypervisor executed on the at least one processor and/or processor core. Modifying and/or altering access to one or more page tables and/or page table trees can, for example, involve applying appropriate settings in one or more page tables, one or more stages of a page table tree and/or one or more PTTs. This can ensure proper isolation of hardware resources and freedom from interference.

Generally, a page table refers to a data structure used by a virtual memory system in a computer operating system to store the mapping between virtual memory addresses and a physical memory of the hardware platform, for example in the form of one or more page table entries in the page table and/or a page table tree. Optionally, page tables can hold and/or be associated with permission settings on memory access, and/or other settings. Page tables can further be arranged or structured as multilevel or multistage page table trees in hierarchical manner, for instance comprising at least a stage-1 page table tree (also referred to as level-1 page table), PTT, and a stage-2 PTT (also referred to as level-2 page table). In multilevel page tables, page table entries of the level-1 page table can be pointers to a level-2 page table (tree) and entries of the level-2 page table (trees) can be pointers to a level-3 page table (tree) and so on. The entries of the last level page table (tree) store actual frame information of the memory, and the level-1 page table (tree) typically contains a single-page table and the address of that table is typically stored in a Page Table Base Register, PTBR. In case of modern ARM-based processors, pointers to the PTT can be stored in Translation Table Base Registers 0 and/or 1, referred to as TTBR0 and TTBR1. As mentioned above, however, the present disclosure is not limited to a particular processor architecture.

Accordingly, by modifying the stage-2 PTT when switching from the safety-critical application to other software, memory or memory pages or memory access settings used by the other software can be defined, which differ from memory or memory pages used by the safety-critical application. Hence, it can be reliably ensured that the other software cannot write to the memory or memory pages used by the safety-critical application. Alternatively, or additionally, when switching from the other software to the safety-critical application, the stage-2 PTT may be modified, such that the safety-critical application can access the memory or memory pages it used before the context switch and resume its execution. Hence, modifying the stage-2 PTT during a context switch can provide an effective means for memory isolation and can ensure safe execution of the safety-critical application.

It should be noted that also other stages of the PTT may be modified or changed during a context switch, in addition to or instead of the stage-2 PTT. In particular, the last stage of a PTT may be modified.

In an example, different settings for the stage-2 PTT may be implemented or configured in different software objects, wherein a first of such objects may be loaded or activated when the safety-critical application is active on the processor core, and a second of such objects may be loaded or activated when the other software is active on the processor core. The first software object may include applying a stage-2 PTT, such that the safety-critical application can (and optionally the other software cannot) read, write, and/or execute code in its memory or memory pages, whereas the second software object, may include applying a stage-2 PTT, such that one or more of reading from, writing to, and execution of code in the memory or memory pages allocated to the safety-critical application from the other software, and optionally also the safety-critical application or any other software, is prohibited.

According to an embodiment, the at least one resource comprises at least one processor register and/or one or more memory pages, which may optionally be maintained by one or more PTTs. Accordingly, in response to detecting that the control flow is transitioning from the safety-critical application to the other software, the supervisor component may prohibit at least one mode of access, for example one or more of write access, read access and permission to execute code, in the at least one processor register, and/or one or more memory pages. Alternatively, or additionally, in response to detecting that the control flow is transitioning from the other software back to the safety-critical application, the supervisor component may allow access of the safety-critical application to the processor register and/or one or more memory pages, for example to resume execution. This can allow to reliably and safely store and restore the state of the safety-critical application when a context switch occurs.

According to an embodiment, detecting a transition of the control flow comprises instructing, by the supervisor component, the processor core to: in response to receiving an instruction to perform an action that is associated with and/or related to the transition of the control flow, diverting the control flow to a handler in the supervisor component. Therein, diverting the control flow may include directing and/or providing the control flow to a handler in the supervisor component.

The handler may refer to a software component including a routine, which may be specifically associated with one or more predefined actions, and/or events associated with, and/or related to the transition of the control flow, and which may be configured to trigger a predefined response or action in response to said one or more actions and/or events occurring. Accordingly, the handler can dictate a particular response or subsequent action or step to be triggered, once one or more actions and/or events occur in the course of a context switch.

It should be noted that one handler may be responsible for and/or associated with a single action or a plurality of actions. Accordingly, the supervisor component may maintain or include one or more handlers associated with one or more actions. Also, a stepwise, stage-wise or hierarchical handling may be implemented, which may include or involve a plurality of handlers, wherein an output of one handler, for example a first or common handler, may be provided as input to a further handler.

As used herein, an instruction to perform an action that is associated with and/or related to the transition of the control flow is to be construed broadly. Such instruction can be based on or can be implemented based on various possible mechanisms. Examples of such mechanisms are exceptions or traps triggered upon access violation to the at least one resource by any software process other than the safety-critical application, and dedicated calls or hypervisor calls within other software, such as kernel.

For example, one or more traps may be configured on the processor and/or processor core(s) to divert the control flow to the respective handler in the supervisor component and/or a hypervisor. In other words, trapping, also referred to as hardware-rooted or hardware-assisted trapping, of the at least on processor core may be used to trap and/or divert the control flow into one or more of the hypervisor, the supervisor component, and/or the respective handler. Alternatively, or additionally, one or more traps for diverting the control flow may be provided. For example, the kernel may be configured to trigger such traps. Generally, an exception may be considered as a condition or criterion, which when fulfilled triggers a trap, which may be detected to take further action. In other words, a trap and/or corresponding exception can cause diverting the control flow into the supervisor component and/or the respective handler. Further diversions to the supervisor component can be configured.

Optionally, the diverting of the control flow and/or trapping may include trigger and/or be accompanied with executing an exit of the first execution environment, for example virtual machine providing the first execution environment, which can be detected by the hypervisor and/or the supervisor component, for example based on a corresponding exit signal or status code of the first execution environment. The exit of the first execution environment, the corresponding exception, and/or trap can allow to invoke the associated functions of one or more the hypervisor, the supervisor component, and/or the respective handler.

Traps could be produced at least in part programmatically, for instance by Hypervisor Calls (HVC), and/or whenever the other software, e.g., a guest OS, some process in user-space (e.g., executing a system call), and/or a guest OS kernel, tries to re-write content of specific core registers (also referred to as processor or process registers) of the processor and/or memory pages (virtual and/or physical memory pages) that should be protected.

It may be determined whether memory elements in the page table tree (PTT) for the safety-critical application have expected sizes and/or are located at expected places. Accordingly, integrity of a paging tree, and/or memory, or memory pages used by the safety-critical application may be ensured. Alternatively, or additionally, it may be verified whether memory pages used by the safety-critical applications do not conflict with address spaces and/or memory pages of other software, such as e.g., a non-safety-critical application, a guest OS, and/or a guest OS kernel. One or more of the aforementioned measures to ensure safe execution of the safety-critical application can be performed by the supervisor component, one or more handlers thereof, and/or another component, such as e.g., a hypervisor. Further, if any of the aforementioned verifications fails, a fault may be indicated. Hence, it may be reliably detected whether the safety-critical application is faulty and e.g., countermeasures should be performed, or safe execution can be positively confirmed in absence of specific faults.

According to an embodiment, the method further comprises in response to the safety-critical application raising a system call (also referred to as syscall) to an operating system in the first execution environment, checking whether the system call is on a list of allowed system calls, and if the system call is on this list, executing the system call, whereas, if the system call is not on this list, reporting a fault. Accordingly, an OS or guest OS may be executed in the first execution environment, for example in a first virtual machine, and the safety-critical application may perform a system call to the OS and/or its kernel software, which can trigger or cause the supervisor component to check whether the system call can be allowed or not. Hence, system calls potentially affecting or corrupting the state of the safety-critical application can be prohibited or suppressed, or at least it can be reported that such system call was executed, such that countermeasures or monitoring functions can be executed by the supervisor component to ensure safe execution of the safety-critical application. On the other hand, in case a system call is whitelisted which can mean that all handlers are in place to ensure freedom from interference of the safety-critical application, such system call may be allowed without reporting.

The term "system call" or "system call instruction" may generally refer to an instruction for an action to be performed and/or a function to be provided by the kernel, which may result in control flow diversion and privilege transition between software components of different privilege level. For instance, one or more resources of the hardware platform and/or data can be requested by the safety-critical application in the course of its execution, and one or more corresponding system calls can be raised by the safety-critical application, requesting the kernel to provide the one or more resources and/or data. Exemplary and non-limiting system calls can read data from user-space, write data to user-space, modify a process of one or more applications, add a process or application, remove a process or application, call or execute one or more other processes or applications, and combinations thereof.

According to an embodiment, the method further comprises notifying, by an operating system on top of which the safety-critical application runs in the first execution environment, the supervisor component of intended actions by means of hypervisor calls, HVC. As mentioned above, other mechanisms may be based on trapping, e.g., hardware-rooted trapping and/or trapping on software level, for example on the safety-critical application itself, on the guest OS, another process in user-space, and/or a guest OS kernel. The handler within the hypervisor can be configured to further divert to the supervisor and/ or one or more handlers thereof.

According to an embodiment, the intended actions comprise one or both of starting a process and allocating memory pages to a process. In particular when setting-up a new process, for example by a guest OS, which can include a further safety-critical application or a non-safety-critical applications, the state, memory, and/or data of the safety-critical application could possibly be corrupted, for example due to the allocation of memory pages to the process that could interfere with the safety-critical application. Hence, notifying the hypervisor and supervisor component can, for example, allow to take appropriate preparation steps, monitoring functions, protection means, and/or countermeasures.

According to an embodiment, the first execution environment is a virtual machine that is instantiated by a hypervisor running on a higher privilege level than the virtual machine. In other words, the hardware platform or computing system may comprise a hypervisor for controlling a virtualization environment including at least one virtual machine that provides the first execution environment, in which the safety-critical application is executed, for example on top of a guest OS and/or guest OS kernel. By executing the safety-critical application on top of a guest OS in a virtual machine, which is instantiated by the hypervisor of higher privilege level, the hypervisor can be enabled to take over control of the control flow and divert the control flow to the supervisor component and/or one or more handlers thereof. In an optional implementation, the supervisor component may be part of the hypervisor.

In an exemplary embodiment, the hypervisor comprises a watchdog that is configured to be regularly triggered with heartbeat signals indicating normal operation of the safety-critical application. In other words, the safety-critical application may indicate health and/or a health status to the watchdog of the hypervisor. Therein, the watchdog may be a software-based health monitor for monitoring health of the safety-critical application. Alternatively, or additionally, also the supervisor component may indicate normal operation of the supervisor component and/or the safety-critical application to the hypervisor based on supplying one or more heartbeat signals or error indications to the hypervisor.

In response to the heartbeat signals and error indication(s) ceasing, the hypervisor can determine that one or more of the safety-critical application and the supervisor component is faulty or indicates a fault, and optionally can initiate remedial action to restore a working state of the safety-critical application and/or of the supervisor component. For example, heartbeat signals may be provided in predefined sequence and/or in predefined time intervals. The hypervisor may detect a fault in one or more of the safety-critical application and the supervisor component upon determining a lack of heartbeat signals from one or both of these components during a predetermined period of time. Alternatively and optionally, the supervisor does not provide heartbeats but error indications. The reaction to error indications is the same than the one on invalid heartbeat-signals.

According to an embodiment, one or both, the supervisor component and the safety-critical application can optionally include a canary component configured to provide heartbeat signals and/or fault indications/ report to the watchdog or health monitor of the hypervisor. Such canary component can be implemented in software to provide heartbeat signals at predefined intervals. The canary component of the supervisor component and/or the canary component of the safety-critical application can be configured to receive health indications, and/or reported faults from the safety-critical application, and/or the supervisor component. In response to receiving a bad health indication, and/or a reported fault, the canary component of the supervisor component and/or the safety-critical application may cease to provide the heartbeat signals or the canary component of the supervisor might indicate a fault, thereby notifying the watchdog of the hypervisor about the bad health indication and/or reported / detected fault.

According to an embodiment, the method further comprises processing, by the safety-critical application, measurement data acquired by at least one sensor into an actuation or control signal, and actuating at least one land, air, or sea vehicle, at least one robot, and/or any component thereof, with the actuation signal. In other words, based measurement or sensor data from one or more sensors, the safety-critical application may determine the actuation signal to actuate at least one component of a land, air, or sea vehicle, and/or at least one robot, which can be any type of robotic equipment. For instance, an output of the safety-critical application may include the actuation signal, which can actuate one or more display components in a vehicle.

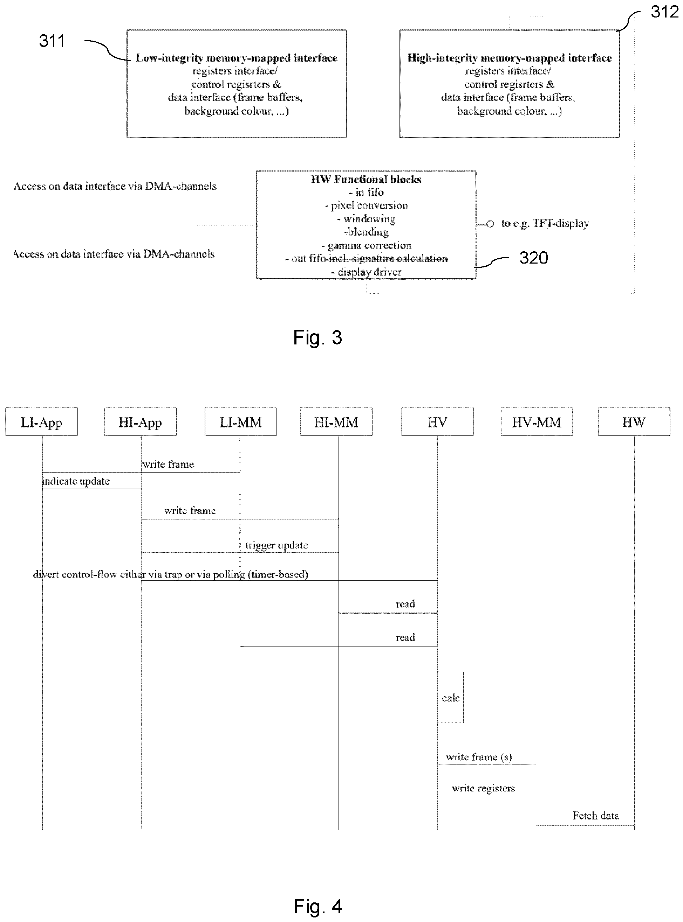

Further details are now described below with reference to further embodiments, as shown in Fig. 3.

As can be seen, embodiments may include HW functional blocks 320 including an in- and an out-FIFO as well as functionalities as described above. According to a basic principle of the proposed approach, separate memory-mapped interfaces 311 and 312 are provided. A first memory-mapped interface 311, also referred to herein as "high-integrity memory-mapped interface", may be assigned to and used by a safety-critical application while a second memory-mapped interface 312, may be assigned to and used by others software, e.g., non-safety-critical applications. The memory-mapped interfaces 311 and 312 may be provided and associated with hardware via direct memory access (DMA) channels. According to the separation of memory-mapped interfaces, they each may have the respective registers interface/control registers, and data interfaces (frame buffers, information on background color, and/or the like).

So, according to the proposed approach interface separation between non-safety-critical applications (also referred to herein as "low-integrity (LI) applications") and safety-critical applications (also referred to herein as "high-integrity (HI) applications") is provided which allows to control access to the HWs memory-interface to high- and low-integrity applications.

Given the support for such a mixed-criticality interface established fault-detection mechanisms implemented in the HW can be replaced if the HW holds a claim on data-integrity.

So, the memory-mapped interface separation provides two "domains": a LI- and a HI-domain. HI-applications may solely use the HI-domain/memory-mapped interface 311 of the HW's interface while LI-applications use the LI-domain/memory-mapped interface 312.

As mentioned above, the proposed approach allows to dispense with a verification mechanism for verifying the integrity of the data processed. Accordingly, the functional feature "signature calculation" is crossed out, as it is no more required compared to the concept explained with reference to Fig. 1 once our separate memory-mapped interfaces for applications of different criticality and once the HW itself holds a claim on data-integrity as described before.

The present example, e.g., refers to an implementation in connection with a display control unit (DCU) as an example. Accordingly, the data stored in the memory-mapped interfaces may include video and/or frame data. Such video and/or frame data may include single frames or frame sequences or information from processed frames or frames sequences. The data, e.g., includes pixel data, information on bounding boxes, object positions, telltale images, and/or the like.

Accordingly, the functionalities may include video and/or image processing functionalities such as pixel conversion, windowing, blending, gamma correction, and/or the like.

In this context, the safety-critical application may provide frame and/or image data important for safety-critical functionalities, e.g., for safely operating driver assistance or autonomous driving systems. Examples of the safety-critical application, e.g., provide so-called "telltale" images or symbols (also referred to herein as "telltales"). Telltale symbols, or "telltales," may include graphical symbols or images on a vehicle's dashboard that provide information about a status and functionality of various systems and devices. These symbols may use different colors to convey certain messages.

Such data important for one or more safety-critical functionalities is stored in the high-integrity memory-mapped interface 311. For this, the supervisor component allows the safety-critical application to write the data into the high-integrity memory-mapped interface 311 when the control flow switches to the safety-critical application. Afterwards, when the control flow switches away from the safety-critical application, e.g., to other software such as the non-safety-critical application, write access to the high-integrity memory-mapped interface is revoked/prohibited.

In contrast, the non-safety-critical application may provide frame and/or image data not related to any safety-critical functionality. Such frame and/or image data, e.g., only serves for entertainment and/or user experience purposes. Other examples include visualizations of a vehicle's position within a lane, of other vehicles in front of the ego vehicle, and/or of maps, and/or the like. When the control flow switches to the non-safety-critical application, no write access to the high-integrity memory-mapped interface 311 is granted. The non-safety-critical application write the respective data into the low-integrity memory-mapped interface 312.

Further details on the data flow are now described below with reference to Fig. 4.

As can be seen the non-safety-critical application ("LI-App") writes a (non-safety-critical) frame into the low-integrity memory-mapped interface ("LI-MM"). Once writing the frame into the low-integrity memory-mapped interface is done, the non-safety-critical application indicates the completion or the update to the safety-critical application ("HI-App").

Then or triggered by any other event, e.g. timer, the control flow switches to the safety-critical application. In accordance with the proposed approach, the supervisor component grants the safety-critical application write access to the high-integrity memory-mapped interface.

The safety-critical application writes a (safety-critical) frame into the high-integrity memory-mapped interface.

In a next step, the safety-critical application triggers an update of a DCU output.

In a further step, an actor hypervisor processes the data (e.g., in one or more calculations; see step "calc").

The HW processes the frame data.

Alternatively and optionally, further SW-based processing steps can be added. Another safety-critical application can be added to the one of the first execution environments. This application must be associated with the memory-mapped (MM) interface linked to the HW/ DCU. The hypervisor maps the output of the safety-critical application to the MM interface of the one of the first execution environments to the MM interface of the first execution environment.

Note: a memory mapped interface typically means, that all the memory pages are accessible by the associated SW/ application and the HW. In this specific case, the interpretation of memory mapped interface is broader. Once a first execution environment is used and the HV maps the MM of the safety critical application of one of the first execution environments to the application of the one of the first execution environments, this memory mapping is not necessarily seen to the HW/ DCU but only to the SW associated with the first mapping. The memory management is done by the hypervisor.

In doing so, as mentioned above, e.g., pixel conversion, windowing, blending, and/or gamma correction may be applied to the frame/image data. A processing pipeline implementing such data processing.

Then, the processed data, e.g., one or more further frames and/or images are written into the hypervisor's memory-mapped interface ("HV-MM"). Additionally, one or more registers may be updated. e.g. those defining regions of interest (ROIs), color settings, ...

In a next step, the process data is provided to hardware. In the present example, e.g., the frames or images of the processing result is provided to a display for presenting them to a user.

In the shown process, the control flow diversion may be triggered as follows:
LI-app may indicate update completion, e.g., of frame buffers via synchronous or asynchronous communication. In turn, the supervisor component may detect a transition of a control flow. The control flow diversion may be triggered when the non-safety-critical application indicates via synchronous or asynchronous communication with the safety-critical application or via a control register provided by the hardware platform completion of a data transfer.

In practice, this could be a binary information indicating completion per frame or a control register used to initiate update, or further methods.

The HI-app may indicate update completion via a control register and/or based on events. Accordingly, control flow diversion may be detected based on an exception in response to diverting a process flow to an application running in one of the first execution environments for processing data stored in the first memory-mapped interface. Exceptions on write-access to the memory-mapped interface may be controlled as described in the European patent application 23205574.9.

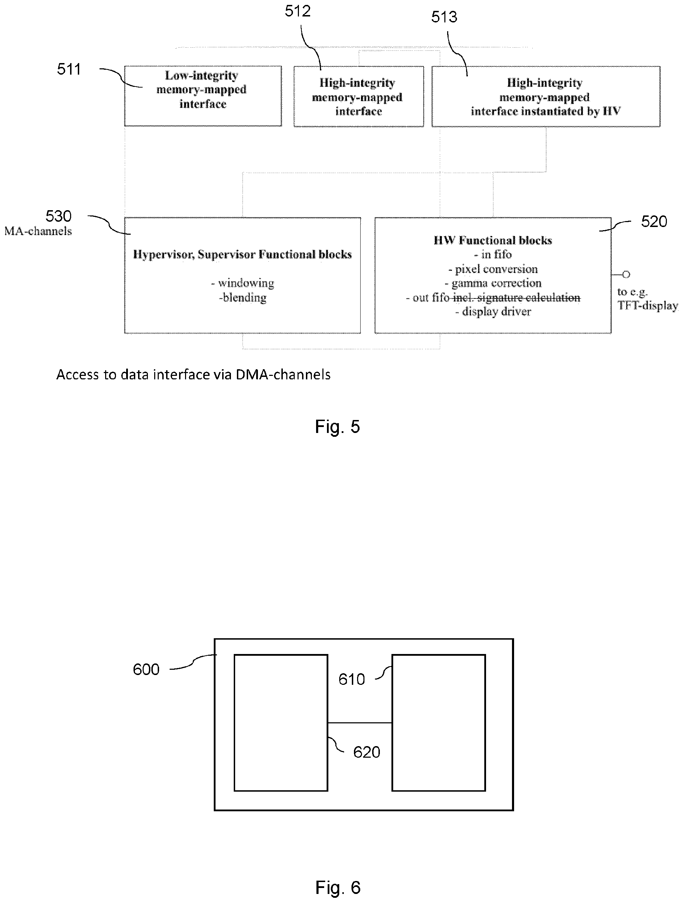

Exception handling within the HV can be used to further divert the control flow to additional functionality required to pre-process data before providing it to the HW-pipeline, as laid out in more detail below with reference to Fig. 5.

The diversion to data post-processing within the HW-device is initiated by e.g. control registers. Virtualization and access may be controlled by the HV. Instead of trapping updates on registers, some HW might support a timer-based processing. An update may be executed regularly in predefined cycles, e.g., every 20 ms.

A skilled person having benefit from the present disclosure will appreciate that the mentioned functionalities may be not only implemented in hardware but alternatively also and software (SW), as laid out in more detail below with reference to Fig. 4. In embodiments, the one or more functionalities may be implemented in the hypervisor, the supervisor component, or in any of the first execution environments.

Fig. 5 shows a block diagram schematically illustrating another embodiment of the proposed approach.

As can be seen, e.g., one or more processing functionalities are provided, e.g., here implemented in software. In practice, for example, one or more pre-processing functionalities may be implemented in this way.

According to some embodiments, it is proposed to divert the control-flow to one or more functionalities for pre-processing data stored in the first and/or second memory-mapped interface before providing the processed data to a processing pipeline (see, e.g., HW functionalities blocks) provided by the hardware platform.

Additionally or alternatively, the control flow is diverted for processing the data (directly/immediately or after pre-processing the data) by the processing pipeline.

Here, the one or more functionalities for pre-processing, e.g., include windowing and/or blending. In the present example, those functionalities are implemented in a hypervisor 530. Alternatively, they may be implemented in any other software.

In this way, functionalities may be added to a system. So, this approach then would also fit for being used with HW that does not come with HW-enabled blending of multiple layers.

So, once control-flow can be diverted, any kind of data-processing can be added to those implemented in the DCU (HW functional blocks 520).

Diversion from the HI-application to the SW-based functionality may be implemented or applied as described in the European Patent Application 23205593.9 which is hereby incorporated by reference.

The HV itself or a separate functionality running in EL2 or EL1 can provide that functionality of controlling the diversion flow. For example, a second level handler implemented therein can control the diversion of control-flow. To ensure diversion to the HW itself, the corresponding memory-mapped register may be updated. This may be executed by the HV and based on mappings (e.g., level-2-mappings).

In embodiments of the proposed approach, the high-integrity memory-mapped interface 511 may be virtualized by a third memory-mapped interface 513. In this way, the high-integrity memory-mapped interface 511 can be accessed through virtualization by the third memory-mapped interface 513. In this way, the virtualization is controlled by the hypervisor 530.

As shown here, the third memory-mapped interface for accessing, by the one or more processing functionalities, the first memory-mapped interface (high-integrity memory-mapped interface) 511 may be instantiated by the hypervisor 530.

In implementations, the proposed approach may be implemented as a computer where some or all of the discussed features and/or steps in the computer program. Accordingly, embodiments may relate to a computer-implemented method according to the proposed approach.

As well, the proposed approach may be implemented in an apparatus, as laid out in more detail below with reference to Fig. 6.

Fig. 6 shows a block diagram schematically illustrating an embodiment of such an apparatus 600. The apparatus comprises one or more interfaces 610 for communication and a data processing circuit 620 configured to execute the proposed method.

In embodiments, the one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programmable hardware. So, examples of the data processing circuit 620, e.g., comprise a memory, microcontroller, field programable gate arrays, one or more central, and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

In practice, the proposed apparatus may be installed on a vehicle. So, embodiments may also provide a vehicle comprising the proposed apparatus. In implementations, the apparatus, e.g., is part or a component of an assisted or autonomous driving system or of an infotainment system of a vehicle. In examples, the proposed approach, e.g., may be implemented in a DCU of a vehicle (e.g., the DCU is part of a system on chip, SOC, of the vehicle).

However, it is noted that the proposed approach may be also applied for other use cases. Accordingly, the proposed approach may be applied for other functionalities. As well, the skilled person will appreciate that embodiments are not limited to the embodiments described herein. In particular, the skilled person will understand that the proposed approach is not limited to the mentioned techniques for diversion flow control, to any specific number of memory-mapped interfaces (also any other number of memory-mapped interfaces may be provided), to specific hardware platforms, and/or to a specific type of data. In practice, features described in connection with frame or image data may be similarly applied for any other kind of data.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (200) for executing a safety-critical application on a hardware platform, the method (200) comprising:
executing (210), in one or more first execution environments on the hardware platform, the safety-critical application;
executing (220), in a second execution environment on the hardware platform, a supervisor component for the safety-critical application;
providing (230) a first memory-mapped interface used by the safety-critical application;
providing (240) a second memory-mapped interface used by a non-safety-critical application running in one of the first execution environments;
detecting (250), by the supervisor component, a transition of a control flow between the safety-critical application and the non-safety-critical application running in the first execution environment; and
in response to detecting that the control flow is transitioning from the safety-critical application to the non-safety-critical application, restricting (260), by the supervisor component, access to the first memory-mapped interface.

2. The method (200) of claim 1, wherein the method (200) further comprises:
providing one or more processing functionalities;
instantiating by a hypervisor a third memory-mapped interface for accessing, by the one or more processing functionalities, the first memory-mapped interface via the third memory-mapped interface.

3. The method (200) of any one of the preceding claims, wherein the first memory-mapped interface stores first data in one or more first layers, and wherein the second memory-mapped interface stores second data in one or more second layers.

4. The method (200) of claim 3, wherein the first and second data include frame data.

5. The method (200) of any one of the preceding claims, wherein the method (200) is executed for operating a vehicle.

6. The method (200) of any one of the preceding claims, wherein detecting, by the supervisor component, a transition of a control flow comprises:
the non-safety-critical application indicating via synchronous or asynchronous communication with the safety-critical application or via a control register provided by the hardware platform completion of a data transfer; or
the safety-critical application indicating via the control register completion of a data transfer.

7. The method (200) of any one of the preceding claims, wherein detecting, by the supervisor component, a transition of a control flow comprises:
detecting an exception in response to diverting a process flow to an application running in one of the first execution environments for processing data stored in the first memory-mapped interface.

8. The method (200) of claim 7, wherein the method (200) further comprises:
further diverting the control-flow to a functionality for pre-processing data stored in the first and/or second memory-mapped interface before providing the processed data to a processing pipeline provided by the hardware platform; and/or
further diverting the control flow for processing the data by the processing pipeline.

9. The method (200) of any one of the preceding claims, wherein virtualization of and/or access to the first memory-mapped interface is controlled by a hypervisor including the supervisor component.

10. A computer program comprising instructions which, when the computer program is executed by a computer, cause the computer to carry out the method (200) of any one of the claims 1 to 9.

11. A computer-readable data carrier having stored thereon the computer program of claim 10.

12. An apparatus (600) comprising:
one or more interfaces (610) for communication; and
a data processing circuit (620) configured to execute the method (200) of any one of the claims 1 to 9.

13. A vehicle comprising the apparatus (600) of claim 12.
